# FASCICULE DE BREVET EUROPEEN

(11) **EP 0 905 474 B1**
(45) Date de publication et mention de la délivrance du brevet: **07.05.2003**
(21) Numéro de dépôt: 98470018.7
(22) Date de dépôt: 29.07.1998
(51) Int. Cl.: G01B 3/10

(54) **Mètre à ruban à ré-embobinage rapide**
Rollbandmass mit Schnellrückspuleinrichtung
Fast winding tape measure

(30) Priorité: 26.09.1997 FR 9712180
(43) Date de publication de la demande: 31.03.1999
(73) Titulaire: Sicfo Stanley SA, 25000 Besançon (FR)
(72) Inventeur: Ranieri, Eric, 25000 Besançon (FR)
(74) Mandataire: Poupon, Michel

(56) Documents cités:
- FR-A- 1 548 496
- FR-A- 2 199 865
- FR-A- 2 541 446
- GB-A- 2 206 560
- US-A- 3 044 732

## Description

La présente invention concerne un mètre à ruban à réembobinage rapide.

On connaît déjà de tel mètre à ruban à réembobinage rapide.

En général, ce type de mètre comporte de nombreux éléments constitutifs et notamment des petites pièces de liaison, telles que des petits axes ou des petites vis pour fixer les éléments constitutifs ensemble.

Ainsi, le brevet d'invention français FR-A-2 541 446 décrit un mètre à ruban dont le système de bobinage repose essentiellement sur l'association d'un pignon de type annulaire à denture intérieure fixé sur un axe d'une manette et d'un pignon à denture extérieure fixé sur un axe supportant la bobine sur laquelle est monté le ruban, le pignon à denture.

Ce type de mètre à ruban présente de nombreuses petites pièces constitutives qui limitent d'autant la possible automatisation de sa fabrication, l'assemblage des pièces du mètre à ruban étant relativement minutieux et nécessitant donc une main d'oeuvre relativement important d'où un coût de fabrication élevé.

Le but de l'invention est de remédier aux inconvénients de l'art antérieur en proposant un mètre à ruban à réembobinage rapide dont la fabrication pourra être mieux rationalisé voire même totalement inscrit dans un procédé de fabrication automatisé.

Un autre but de l'invention est de proposer un mètre à ruban comportant moins de pièces constitutives donc susceptible d'être moins fragile et de former un ensemble dont la cohésion est meilleure.

Un autre but de l'invention est de proposer un mètre à ruban à réembobinage rapide ayant un montage et un démontage rapide pour pouvoir par exemple remplacer facilement un ruban défectueux.

Conformément à l'invention, on propose à cette fin un mètre à ruban à réembobinage rapide comprenant un boitier dans lequel est montée à rotation une bobine apte à recevoir un ruban de mesure déroulable, une manivelle étant montée à rotation sur une face extérieure du boitier permettant le réembobinage dudit ruban, caractérisé en ce que ledit mètre à ruban est constitué uniquement de quatre éléments en matière synthétique moulé à savoir deux demi-boitiers réalisant le boitier dont un demi-boitier support, la bobine se prolongeant le long de son axe de rotation par une section annulaire à denture extérieure, et la manivelle comportant une section annulaire à denture intérieure, et en ce que le demi-boitier support comporte des moyens permettant la fixation de la bobine et de la manivelle et permettant la mise en contact et l'engrenage de la section annulaire à denture extérieure de la bobine et de la section annulaire à denture intérieure de la manivelle.

De manière préférentielle, ces moyens consistent en un évidement annulaire sur la face extérieure du demi-boitier support délimitant une section cylindrique creuse face intérieure du demi-boitier support et tronquée latéralement dont la base est munie d'un trou central prolongé d'un manchon dans lequel est monté à rotation un axe de rotation de la manivelle, la section cylindrique comportant au niveau de sa partie tronquée une ouverture latérale et dont la base comporte un prolongement semi-circulaire présentant un axe s'étendant perpendiculairement à la face intérieure du demi-boitier support, la bobine étant montée à rotation sur ledit axe, la mise en contact et l'engrenage de la section annulaire à denture extérieure de la bobine et la section annulaire à denture intérieure de la manivelle se faisant par l'intermédiaire de l'ouverture latérale.

On comprendra mieux l'invention suite à la description faite ci-après en référence aux dessins annexés dans lesquels :

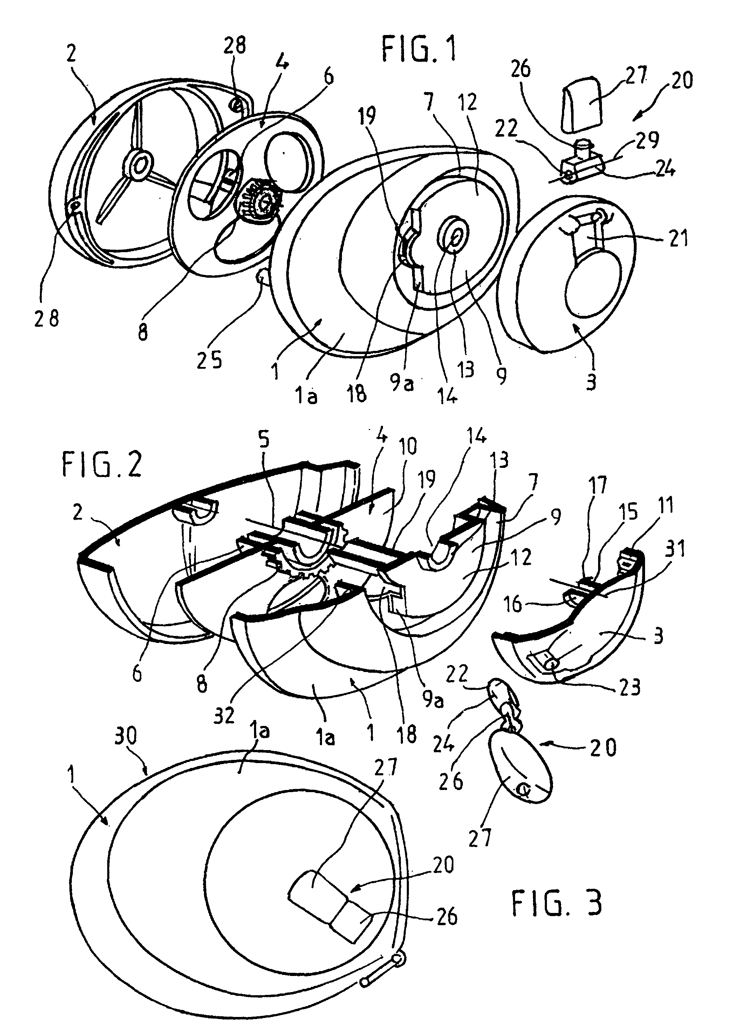

- la figure 1 est une vue en éclaté d'un mètre à ruban selon l'invention,
- la figure 2 est une vue éclatée mettant en évidence la structure des différents éléments moulés réalisant un mètre à ruban,
- la figure 3 est une vue de face d'un mère à ruban.

Un mètre à ruban à réembobinage rapide selon l'invention est composé uniquement de quatre éléments (1,2,3,4) principaux en matière synthétique moulée :
- un demi-boitier support (1)
- une bobine (4) destinée à supporter un ruban,
- une seconde demi-boitier (2) réalisant avec le demi-boitier support (1) un boîtier (30) dans lequel est montée la bobine (4),
- une manivelle (3).

La bobine (4) est constituée d'un flasque (10) se prolongeant le long de son axe de rotation (5) d'un côté par une section annulaire à denture extérieure (8) et de l'autre côté par un moyen de positionnement (6) permettant le positionnement d'un ruban de mesure (non représenté).

La manivelle (3) comporte sur son pourtour une section annulaire à denture intérieure (11) dont le diamètre est supérieur à celui de la section annulaire à denture extérieure (8) de la bobine (4).

Le demi-boitier support (1) comporte une section cylindrique creuse tronquée latéralement (9) délimitée par un évidement (7), sur sa face extérieure (1a) cet évidement permet de loger la section annulaire à denture intérieure (11) de la manivelle (3).

La section cylindrique (9) comporte en outre au niveau de sa base (12) circulaire un trou central (14) prolongé d'un manchon (13) dans lequel est inséré un axe (15) s'étendant sensiblement perpendiculaire de la face intérieure de la manivelle suivant l'axe de rotation (31) de celle-ci, permettant de monter à rotation ladite manivelle (7) dans le demi-boitier support (1).

L'extrémité (16) de cet axe (15) est munie avantageusement d'un moyen de blocage de la manivelle (3) sur le demi-boitier support (1) par exemple une collerette biseautée (17).

La section cylindrique (9) du demi-boitier support (1) comporte au niveau de sa partie tronquée (9a) une ouverture latérale (18) et sa base (12) se prolonge radialement au niveau de ladite ouverture (18) par une section semi-circulaire (32) comportant sur sa face intérieure un axe (19) perpendiculaire, ledit axe étant excentré par rapport au trou central (24).

La bobine (4) est montée à rotation sur cet axe (19) suivant son axe de rotation (5), la mise en contact directe et l'engrenage de la section annulaire à denture extérieure (8) de ladite bobine (4) et de la section annulaire à denture intérieure (11) de la manivelle (3) s'effectuant par l'intermédiaire de ladite ouverture.

Avantageusement, la manivelle (3) est munie d'une manette escamotable (20) dans un logement (21) de forme complémentaire à ladite manette escamotable de la face extérieure de la manivelle (3).

Cette manette escamotable consiste en une pièce d'articulation (24) montée pivotante dans le logement (21) par exemple au moyen de deux ergots (22) venant s'insérant dans deux trous (23), ladite articulation (24) se prolongeant par un axe (26) perpendiculaire à l'axe de pivotement (29) sur lequel est monté à rotation un maneton (27).

Les demi-boitiers (1,2) comporte des moyens de liaison par exemple des ergots (25) venant s'engager dans des ouvertures (28).

## Revendications

1. Mètre à ruban à réembobinage rapide comprenant un boîtier (30) dans lequel est montée à rotation une bobine (4) apte à recevoir un ruban de mesure déroulable, une manivelle (3) étant montée à rotation sur une face extérieure du boîtier permettant le réembobinage dudit ruban, **caractérisé en ce que** ledit mètre à ruban est constitué uniquement de quatre éléments (1,2,3,4) en matière synthétique moulée à savoir deux demi-boîtiers (1,2) réalisant le boîtier dont un demi-boîtier support (1), la bobine (4) se prolongeant le long de son axe de rotation par une section annulaire à denture extérieure (8), et la manivelle (3) comportant une section annulaire à denture intérieure, et **en ce que** le demi-boîtier support comporte des moyens permettant la fixation de la bobine et de la manivelle et permettant la mise en contact et l'engrenage de la section annulaire à denture extérieure (8) de la bobine (4) et de la section annulaire à denture intérieure (11) de la manivelle.

2. Mètre à ruban selon la revendication 1, **caractérisé en ce que** lesdits moyens consistent en un évidemment annulaire (7) sur la face extérieure du demi-boîtier support délimitant une section cylindrique (9) creuse face intérieure du demi-boîtier support (1) et tronquée latéralement dont la base (12) est munie d'un trou central (14) prolongé d'un manchon (13) dans lequel est monté à rotation un axe (15) de rotation de la manivelle (3), la section cylindrique (9) comportant au niveau de sa partie tronquée (9a) une ouverture latérale (18) et dont la base comporte un prolongement radial semi-circulaire (32) présentant un axe (19) s'étendant perpendiculairement à la face intérieure du demi-boîtier support, la bobine (4) étant montée à rotation sur ledit axe, la mise en contact et l'engrenage de la section annulaire à denture extérieure (8) de la bobine (4) et la section annulaire à denture intérieure (11) de la manivelle (3) se faisant par l'intermédiaire de l'ouverture latérale (18).

3. Mètre à ruban selon la revendication 2, **caractérisé en ce que** l'extrémité de l'axe (15) de rotation de la manivelle est munie d'un moyen de blocage de la manivelle (3) sur le demi-boîtier support (1).

4. Mètre à ruban selon l'une quelconque des revendications 1 à 3, **caractérisé en ce que** la manivelle (3) est munie d'une manette escamotable (20) dans un logement (21) de forme complémentaire à ladite manette escamotable de la face extérieure de la manivelle (3).

5. Mètre à ruban selon la revendication 4, **caractérisé en ce que** la manette escamotable consiste en une pièce d'articulation (24) montée pivotante dans le logement (21) au moyen de deux ergots (22) venant s'insérer dans deux trous (23), ladite articulation (24) se prolongeant par un axe (26) perpendiculaire à l'axe de pivotement (29) sur lequel est monté à rotation un maneton (27).

## Patentansprüche

1. Rollbandmaß mit Schnellrückspuleinrichtung mit einem Gehäuse (30), in dem eine Spule (4) zur Aufnahme eines spulbaren Messbands drehbar angeordnet ist, wobei auf einer äußeren Stirnfläche des Gehäuses ein Handgriff (3) drehbar angeordnet ist, der ein Zurückspulen des genannten Bandes ermöglicht, **dadurch gekennzeichnet, dass** das Rollbandmaß ausschließlich durch vier Elemente (1,2,3,4) aus geformtem Kunststoff gebildet ist, und zwar aus zwei Gehäusehälften (1,2), die das Gehäuse bilden, wovon eine der Gehäusehälften ein Gehäusehälfte-Träger (1) ist, wobei die Spule (4) einen sich entlang ihrer Drehachse erstreckenden ringförmigen Abschnitt mit einer Außenverzahnung (8) und der Handgriff (3) einen ringförmigen Abschnitt mit einer Innenverzahnung aufweisen, und dass der Gehäusehälfte-Träger Mittel aufweist, die eine Befestigung der Spule und des Handgriffs sowie ein Inkontakt- und Ineingriffbringen des ringförmigen Abschnitts mit der Außenverzahnung (8) der Spule (4) mit dem ringförmigen Abschnitt mit einer Innenverzahnung (11) des Handgriffs ermöglichen.

2. Rollbandmaß nach Anspruch 1, **dadurch gekennzeichnet, dass** die genannten Mittel durch eine ringförmige Aussparung (7) auf der äußeren Stirnfläche des Gehäusehälfte-Trägers (1) gebildet sind, die einen seitlich abgeschnittenen, von der Innenfläche des Gehäusehälfte-Trägers (1) hohlen zylindrischen Abschnitt (9) begrenzt, dessen Bodenfläche (12) mit einer zentralen Öffnung (14) versehen ist, die durch eine Hülse (13) verlängert wird, in der eine Drehachse (15) des Handgriffs (3) drehbar gelagert ist, wobei der zylindrische Abschnitt (9) in Höhe seines abgeschnittenen Teils (9a) eine seitlich ausgebildete Öffnung (18) aufweist und seine Bodenfläche eine radiale halbkreisförmige Verlängerung (32) hat, die eine Achse (19) aufweist, die sich senkrecht zur Innenfläche des Gehäusehälfte-Trägers erstreckt, wobei die Spule (4) auf der genannten Achse drehbar gelagert ist und das Inkontakt- und Ineingriffbringen des ringförmigen Abschnitts mit der Außenverzahnung (8) der Spule (4) mit dem ringförmigen Abschnitt mit einer Innenverzahnung (11) des Handgriffs (3) mittels der seitlich ausgebildeten Öffnung (18) erfolgt.

3. Rollbandmaß nach Anspruch 2, **dadurch gekennzeichnet, dass** das Ende der Drehachse (15) des Handgriffs mit einem Mittel zum Arretieren des Handgriffs (3) auf dem Gehäusehälfte-Träger (1) versehen ist.

4. Rollbandmaß nach einem der Ansprüche 1 bis 3, **dadurch gekennzeichnet, dass** der Handgriff (3) mit einem Bedienungshebel (20) versehen ist, der in eine Aufnahme (21) in der äußeren Stirnfläche des Handgriffs (3) versenkbar ist, deren Form dem genannten versenkbaren Bedienungshebel entspricht.

5. Rollbandmaß nach Anspruch 4, **dadurch gekennzeichnet, dass** der versenkbare Bedienungshebel durch ein Gelenkteil (24) gebildet ist, das in der Aufnahme (21) mittels zweier Vorsprünge (22) drehbar gelagert ist, die sich durch zwei Öffnungen (23) hindurch erstrecken, wobei das genannte Gelenkteil (24) durch eine Achse (26) verlängert wird, die senkrecht zur Drehachse (29) angeordnet ist, auf der ein Kurbelzapfen (27) drehbar gelagert ist.

## Claims

1. Fast rewinding tape measure comprising a casing (30), in which is rotatably mounted a spool (4) capable of accommodating an unwindable tape measure, a handle (3) being rotatably mounted on an external face of the casing and permitting said tape to be rewound, **characterised in that** said tape measure is made up solely of four elements (1, 2, 3, 4) formed from moulded synthetic material, namely two half-casings (1, 2) creating the casing, of which one is a support half-casing (1), the spool (4) extending along its axis of rotation through an externally toothed annular section (8), and the handle (3) comprising an internally toothed annular section, and **in that** the support half-casing comprises means permitting the spool and the handle to be secured and permitting the externally toothed annular section (8) of the spool (4) to make contact and mesh with the internally toothed annular section (11) of the handle.

2. Tape measure according to claim 1, **characterised in that** said means comprise an annular slot (7) on the external face of the support half-casing, so as to define a hollow cylindrical section (9), the internal face, of the support half-casing (1), which hollow cylindrical section is truncated laterally, and the base (12) of which is provided with a central hole (14) extended by a sleeve (13), in which is rotatably mounted a rotary spindle (15) of the handle (3), the cylindrical section (9) comprising a lateral opening (18) on a level with its truncated portion (9a), the base of which cylindrical section comprises a semi-circular radial extension (32) having a spindle (19) extending perpendicularly to the internal face of the support half-casing, the spool (4) being rotatably mounted on said spindle, the externally toothed annular section (8) of the spool (4) being brought into contact and meshing with the internally toothed annular section (11) of the handle (3) through the intermediary of the lateral opening (18).

3. Tape measure according to claim 2, **characterised in that** the end of the rotary spindle (15) of the handle is provided with a means for locking the handle (3) on the support half-casing (1).

4. Tape measure according to any of claims 1 to 3, **characterised in that** the handle (3) is provided with a retractable lever (20) in a housing (21) of complementary form to said retractable lever on the external face of the handle (3).

5. Tape measure according to claim 4, **characterised in that** the retractable lever comprises a hinge part (24), pivotably mounted in the housing (21) by means of two lugs (22) which are inserted into two holes (23), said hinge (24) extending through a spindle (26) which is perpendicular to the pivotal spindle (29) on which a crank-pin (27) is rotatably mounted.
